# EUROPEAN PATENT APPLICATION

(11) **EP 4 808 100 A1**
(43) Date of publication of application: **16.09.2026**
(21) Application number: 25186682.8
(22) Date of filing: 01.07.2025
(51) Int. Cl.: H04N 1/00

(54) **INFORMATION PROCESSING SYSTEM, INFORMATION PROCESSING PROGRAM, AND INFORMATION PROCESSING METHOD**

(30) Priority: 10.03.2025 JP 2025037230
(71) Applicant: FUJIFILM Business Innovation Corp., Minato-ku Tokyo (JP)
(72) Inventor: MUNEHIRO, Takuma, Yokohama-shi, Kanagawa (JP)
(74) Representative: Becker Kurig & Partner Patentanwälte mbB

(57) **Abstract**

An information processing system includes a processor, and a memory, in which the memory has a plurality of count value storage regions in which a plurality of count values, which are respectively in correspondence with respective operations of a count target apparatus and are counted in response to the respective operations of the count target apparatus, are stored, and the processor is configured to count a first count value among the plurality of count values in response to a first operation of the count target apparatus, and change, in a case where a predetermined change condition is satisfied, a count value counted in response to the first operation from the first count value to a second count value, which is a count value other than the first count value among the plurality of count values.

## Description

### BACKGROUND OF THE INVENTION

### (i) Field of the Invention

The present invention relates to an information processing system, an information processing program, and an information processing method.

### (ii) Description of Related Art

In the related art, a count value is counted in response to an operation of a count target apparatus and stored in a memory.

For example, an image forming apparatus, as a count target apparatus, that includes an EEPROM, as a memory, storing a count value obtained by counting of the number of output sheets and the like is disclosed in JP2012-175556A in which a spare storage region that is not scheduled to be used is ensured in the EEPROM, in addition to a storage region in which the count value is stored, and the storage region in which the count value is stored is switched to the spare storage region in a case where a period set in advance is reached.

### SUMMARY OF THE INVENTION

Incidentally, the memory may store a plurality of count values in correspondence with respective operations of the count target apparatus. For example, in a case where the count target apparatus is an image processing apparatus, the memory stores, as the count value, the plurality of count values such as a count value obtained by counting of an operation time of the image processing apparatus and a count value obtained by counting of the number of times of activation of an image output terminal (IOT) of the image processing apparatus. The memory may be provided in the count target apparatus or in an apparatus other than the count target apparatus.

In a case where the memory stores the plurality of count values, a storage region for storing the plurality of count values is provided in advance. The storage region is generally configured of a plurality of count value storage regions in which respective count values are stored. Here, since the memory may also store various types of data other than the count value, a storage capacity of the storage region for storing the plurality of count values may not be freely increased. For example, the spare storage region for storing the count value may not be provided in the memory.

In such a case, for example, the storage region, that is, the plurality of count value storage regions in which the plurality of count values in correspondence with respective operations of the count target apparatus are already stored may be effectively usable such that the plurality of count values can be appropriately stored in the storage region (in other words, such that the plurality of count values can be appropriately counted).

An object of the present invention is to enable effective use of a plurality of count value storage regions, which is prepared in a memory, in which a plurality of count values in correspondence with respective operations of a count target apparatus are already stored.

According to a first aspect of the present disclosure, there is provided an information processing system including a processor, and a memory, in which the memory has a plurality of count value storage regions in which a plurality of count values, which are respectively in correspondence with respective operations of a count target apparatus and are counted in response to the respective operations of the count target apparatus, are stored, and the processor is configured to count a first count value among the plurality of count values in response to a first operation of the count target apparatus, and change, in a case where a predetermined change condition is satisfied, a count value counted in response to the first operation from the first count value to a second count value, which is a count value other than the first count value among the plurality of count values.

According to a second aspect of the present invention, there is provided the information processing system according to the first aspect, in which the memory may store a count map in which a plurality of combinations of a count item in correspondence with the operation of the count target apparatus and information indicating the count value storage region are defined, and the processor may be configured to change, in a case where the predetermined change condition is satisfied, a content of the count item in association with the count value storage region in which the second count value is stored to a content in correspondence with the first operation, in the count map.

According to a third aspect of the present invention, there is provided the information processing system according to the first or second aspect, in which the predetermined change condition may be that the first count value reaches a predetermined first count threshold value.

According to a fourth aspect of the present invention, there is provided the information processing system according to any one of the first to third aspects, in which the processor may be configured to set, as the second count value, a count value in correspondence with an operation capable of not being executed by the count target apparatus.

According to a fifth aspect of the present invention, there is provided the information processing system according to any one of the first to fourth aspects, in which the processor may be configured to decide the second count value at a point in time at which the predetermined change condition is satisfied.

According to a sixth aspect of the present invention, there is provided the information processing system according to the fourth aspect, in which the count target apparatus may be capable of performing an option operation of which operability is settable by a user of the count target apparatus, and the processor may be configured to set, as the second count value, a count value in correspondence with an option operation that is set to be inoperable at a point in time at which the predetermined change condition is satisfied, among the option operations.

According to a seventh aspect of the present invention, there is provided the information processing system according to the sixth aspect, in which the predetermined change condition may be that the count value in correspondence with the option operation is set as the second count value and then the setting of the option operation is changed to be operable, and the processor may be configured to in a case where the count value in correspondence with the option operation is set as the second count value and then the setting of the option operation is changed to be operable, set a count value counted in response to the option operation as a third count value, which is a count value other than the first count value and the second count value among the plurality of count values.

According to an eighth aspect of the present invention, there is provided the information processing system according to the fourth aspect, in which the processor may be configured to set, as the second count value, a count value that is less than a predetermined second count threshold value at a point in time at which the predetermined change condition is satisfied.

According to a ninth aspect of the present invention, there is provided an information processing program causing a computer including a memory that has a plurality of count value storage regions in which a plurality of count values, which are respectively in correspondence with respective operations of a count target apparatus and are counted in response to the respective operations of the count target apparatus, are stored, the program causing the computer to execute a process including counting a first count value among the plurality of count values in response to a first operation of the count target apparatus, and changing, in a case where a predetermined change condition is satisfied, a count value counted in response to the first operation from the first count value to a second count value, which is a count value other than the first count value among the plurality of count values.

According to a tenth aspect of the present invention, there is provided an information processing method including counting a first count value among a plurality of count values in response to a first operation of a count target apparatus, and changing, in a case where a predetermined change condition is satisfied, a count value counted in response to the first operation from the first count value to a second count value, which is a count value other than the first count value among the plurality of count values.

According to the first, second, ninth, or tenth aspect of the present invention, the plurality of count value storage regions, which is prepared in the memory, in which the plurality of count values in correspondence with respective operations of the count target apparatus are already stored can be effectively used.

According to the third aspect of the present invention, no further counting of the first count value due to the reach of the first count value to the count upper limit value can be suppressed.

According to the fourth or sixth aspect of the present invention, the count value stored in the count value storage region in correspondence with the operation that cannot be executed in the count target apparatus can be set as the second count value.

According to the fifth aspect of the present invention, the second count value can be dynamically decided.

According to the seventh aspect of the present invention, in a case where the count value stored in the count value storage region in correspondence with the option operation is set to the second count value and then the option operation is made operable, the count value can be counted in response to the option operation.

According to the eighth aspect of the present invention, the count value stored in the count value storage region in correspondence with the operation with a low frequency of use in the count target apparatus can be set as the second count value.

### BRIEF DESCRIPTION OF THE DRAWINGS

Exemplary embodiment(s) of the present invention will be described in detail based on the following figures, wherein:
Fig. 1 is a schematic configuration diagram of a multifunctional machine according to the present exemplary embodiment;
Fig. 2 is a table showing a first example of a count map and count values;
Fig. 3 is a table showing a second example of the count map and count values;
Fig. 4 is a table showing a third example of the count map and count values;
Fig. 5 is a table showing a fourth example of the count map and count values;
Fig. 6 is a flowchart showing a flow of processing of the multifunctional machine according to the present exemplary embodiment; and
Fig. 7 is a schematic configuration diagram of a count system.

### DETAILED DESCRIPTION OF THE INVENTION

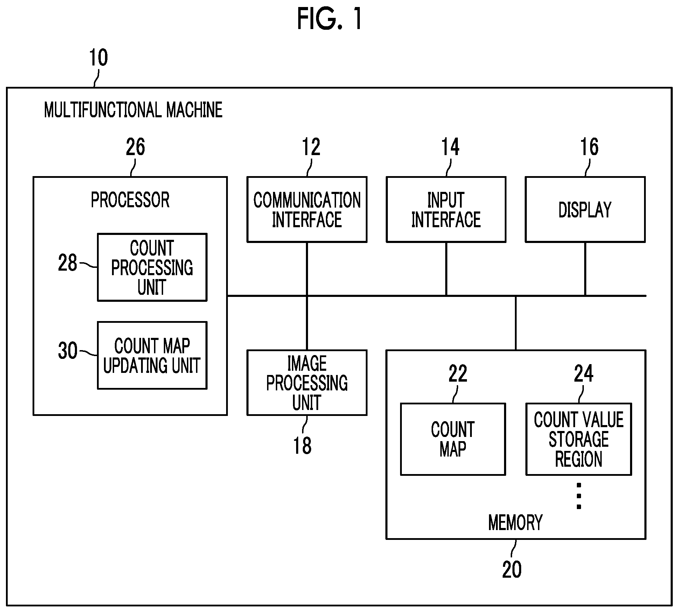

Fig. 1 is a schematic configuration diagram of a multifunctional machine 10, as an information processing system and a count target apparatus, according to the present exemplary embodiment. The multifunctional machine 10 is an office automation (OA) apparatus that exerts a plurality of functions such as a print function, a copy function, a scan function, and a facsimile (FAX) function.

A communication interface 12 is configured of, for example, a network adapter. The communication interface 12 exerts a function of communicating with another device via a communication line, such as a local area network (LAN) or a wide area network (WAN). For example, the communication interface 12 receives a job as a processing command from a user terminal used by a user.

An input interface 14 is configured of, for example, a button or a touch panel. The input interface 14 is used in a case where the user inputs an instruction to the multifunctional machine 10.

A display 16 is configured of, for example, a liquid crystal panel. The display 16 displays various screens in response to an instruction from a processor 26 described below.

An image processing unit 18 is configured of, for example, a printer section or a scanner section, and executes various types of image processing such as print processing, scan processing, or copy processing in response to the instruction from the processor 26.

A memory 20 is configured by including a hard disk drive (HDD), an embedded multi media card (eMMC), a read only memory (ROM), a random access memory (RAM), or the like. The memory 20 stores an information processing program for causing each unit of the multifunctional machine 10 to operate. The information processing program can also be stored in, for example, a computer readable non-transitory storage medium such as a universal serial bus (USB) memory or an SD card. The multifunctional machine 10 can read the information processing program from such a storage medium and execute the information processing program. Further, the memory 20 stores a count map 22, and a plurality of count value storage regions 24 are defined in the memory 20, as shown in Fig. 1.

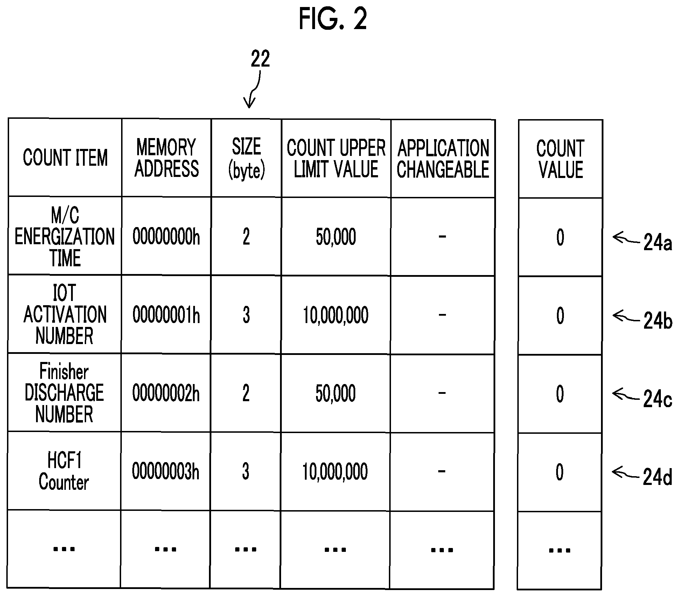

Fig. 2 is a table showing an example of the count map 22 and count values stored in the plurality of count value storage regions 24. In the count map 22, a plurality of combinations of count items in correspondence with an operation of the multifunctional machine 10 and memory addresses as information indicating the count value storage region 24 are defined. Further, the plurality of count value storage regions 24 are storage regions in which the count values counted in response to respective operations of the multifunctional machine 10 are stored, respectively. The plurality of count value storage regions 24 are a part of a storage region of the memory 20 and are dedicated storage regions for storing the count values.

In the present exemplary embodiment, the count value storage region 24 indicated by a memory address "00000000h" is described as a count value storage region 24a, the count value storage region 24 indicated by a memory address "00000001h" is described as a count value storage region 24b, the count value storage region 24 indicated by a memory address "00000002h" is described as a count value storage region 24c, and the count value storage region 24 indicated by a memory address "00000003h" is described as a count value storage region 24d.

The combination of the count item and the count value storage region 24 means that, in a case where the multifunctional machine 10 performs an operation indicated by the count item, the processor 26 (specifically, a count processing unit 28 described below) counts the count value stored in the count value storage region 24 in association with the count item.

In the count map 22, a size, a count upper limit value, and application changeable information may be associated with each count item and count value storage region 24. The size indicates a storage capacity of the count value storage region 24. The count upper limit value is an upper limit value of the count value that is countable in the count value storage region 24. The application changeable information indicates whether or not the count item in association with the count value storage region 24 is changeable. Details of the application changeable information will be described below.

The count map 22 is created in advance by an administrator or the like of the multifunctional machine 10 and is stored in the memory 20. However, as will be described below, in the present exemplary embodiment, the processor 26 (specifically, a count map updating unit 30 described below) dynamically changes the combination of the count item and the memory address (that is, the count value storage region 24). Further, the count value storage region 24 can dynamically rewrite the application changeable information.

The processor 26 is configured to include, for example, a central processing unit (CPU). The processor 26 is communicably connected, via a data bus, to the communication interface 12, the input interface 14, the display 16, the image processing unit 18, and the memory 20. The processor 26 controls each unit of the multifunctional machine 10 by the information processing program stored in the memory 20. In particular, the processor 26 exerts functions as the count processing unit 28 and the count map updating unit 30.

The count processing unit 28 counts the count value in accordance with each operation of the multifunctional machine 10. Specifically, in a case where the multifunctional machine 10 performs an operation in correspondence with the count item of the count map 22, the count processing unit 28 counts the count value stored in the count value storage region 24 in association with the count item. For example, in a case where the count map 22 is as shown in Fig. 2, while the multifunctional machine 10 is energized, the count processing unit 28 counts, for each unit time, the count value stored in the count value storage region 24a in association with a count item "M/C (machine) energization time".

Although not limited thereto, the count value counted by the count processing unit 28 is used as an index of whether or not each component of the multifunctional machine 10 can be recycled.

The count map updating unit 30 updates a content of the count map 22. Specifically, in a case where a predetermined change condition is satisfied, the count map updating unit 30 changes a correspondence relationship between the count item and the memory address (that is, the count value storage region 24 or the count value) in the count map 22.

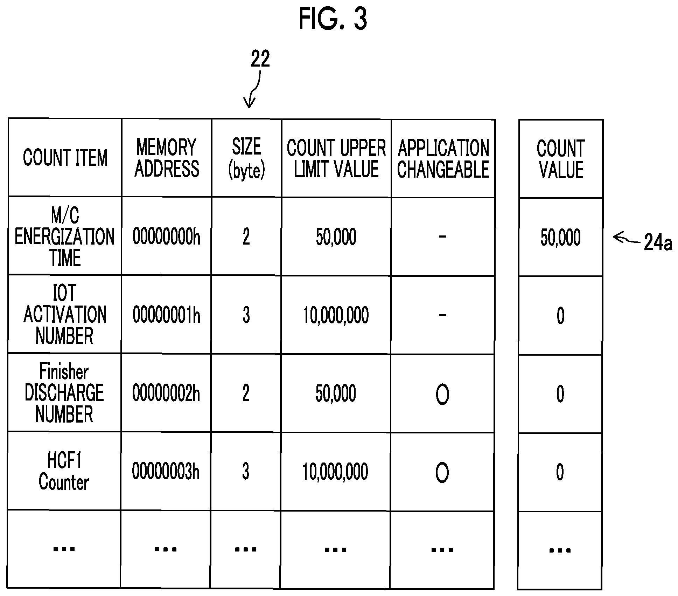

Hereinafter, details of processing of the count map updating unit 30 will be described with reference to specific examples. In a case where the multifunctional machine 10 is energized as a first operation, the count processing unit 28 counts a first count value stored in the count value storage region 24a in association with the count item "M/C energization time" in response to the first operation. In a case where the energization time of the multifunctional machine 10 is accumulated, the first count value stored in the count value storage region 24a eventually reaches the count upper limit value, as shown in Fig. 3. In the above case, the first count value cannot be further counted, and the first count value no longer accurately represents the energization time of the multifunctional machine 10.

For this reason, one of the predetermined change conditions for the count map updating unit 30 to update the content of the count map 22 is that the first count value reaches a predetermined first count threshold value. Accordingly, in a case where the first count value satisfies the predetermined change condition that the first count value reaches the predetermined first count threshold value, the count map updating unit 30 changes the count value counted in response to the first operation (energization of the multifunctional machine 10) from the first count value to a second count value, which is a count value other than the first count value. In other words, in a case where the predetermined change condition is satisfied, the count map updating unit 30 changes a content of the count item, which is in association with the count value storage region 24 in which the second count value is stored, to the count item "M/C energization time" that is the content in correspondence with the first operation in the count map 22. That is, the count map updating unit 30 changes the count item other than the count item "M/C energization time" to the count item "M/C energization time" in the count map 22.

The first count threshold value may be determined in advance by the administrator or the like of the multifunctional machine 10. The first count threshold value may be the count upper limit value of the count value, but may be a value slightly lower than the count upper limit value.

For example, in a case where the first count value in association with the count item "M/C energization time" reaches the first count threshold value, the count map updating unit 30 decides the count item that may be changed. The deciding method will be described below. Here, the count map updating unit 30 determines that a count item "Finisher discharge number" and a count item "HCF1 Counter" are changeable, and sets the application changeable information in association with both count items to "O (possible)".

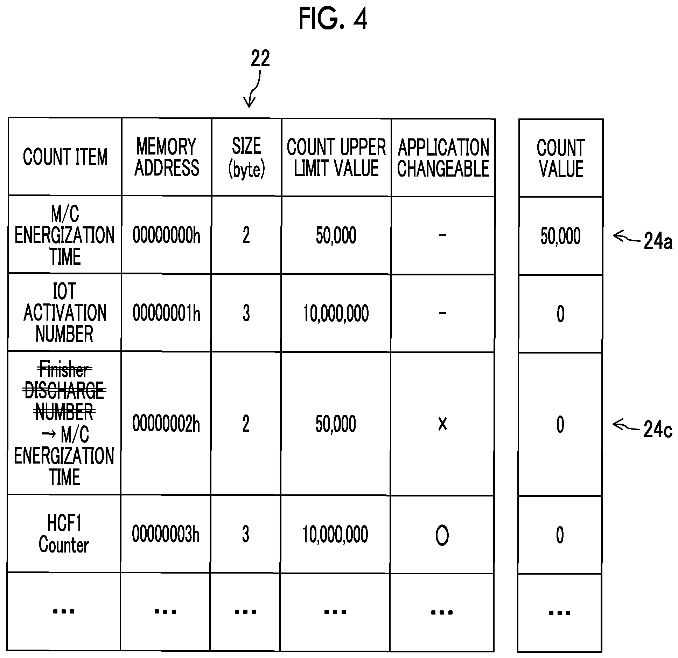

The count map updating unit 30 selects a count item to be changed from the count items of which the application changeable information is "O". Here, the count map updating unit 30 is assumed to change the count item "Finisher discharge number" to the count item "M/C energization time", as shown in Fig. 4. Accordingly, the count value storage region 24c in association with the count item "Finisher discharge number" so far is associated with the count item "M/C energization time". Then, the count map updating unit 30 may change, for example, the application changeable information in association with the newly changed count item "M/C energization time" to "× (impossible)". The above indicates that the newly changed count item "M/C energization time" cannot be further changed to another count item.

Hereinafter, in a case where the multifunctional machine 10 is energized as the first operation, the count processing unit 28 counts the second count value stored in the count value storage region 24c newly associated with the count item "M/C energization time".

With the change in the content of the count map 22 as described above by the count map updating unit 30, even in a case where the multifunctional machine 10 is energized for such a long time that the first count value in association with the initial count item "M/C energization time" reaches the count upper limit value, the energization time of the multifunctional machine 10 can be more accurately measured with the counting of the second count value instead of the first count value.

Note that the count map updating unit 30 does not associate a storage region other than the plurality of count value storage regions 24 defined in advance with the count item "M/C energization time". That is, the count processing unit 28 does not cause the storage region other than the plurality of count value storage regions 24 to store the count to count the count. In particular, the count map updating unit 30 sets the count value that is initially associated with another count item as the second count value. That is, the count processing unit 28 and the count map updating unit 30 can accurately measure the count value by effectively using the plurality of count value storage regions 24, without expanding the count value storage region 24 in the memory 20 or without preparing a spare storage region.

In a case where the first count value in association with the count item "M/C energization time" reaches the first count threshold value, a count item that is newly changed to the count item "M/C energization time" (in other words, a count value in correspondence with a newly changed count item that is to be set as the second count value) may be decided in advance by the administrator or the like of the multifunctional machine 10.

For example, a count value in association with a count item in correspondence with an operation that cannot be executed by the multifunctional machine 10 can be set as the second count value, in the count map 22. The count item in correspondence with the operation that cannot be executed by the multifunctional machine 10 is, for example, the count item "Finisher discharge number" or the like in a case where the multifunctional machine 10 is a single function printer (SFP). In the multifunctional machine 10, since the count value in correspondence with such a count item is not used, the count map updating unit 30 can set the count value in association with the count item as the second count value. In a case where the count map 22 is shared among a plurality of multifunctional machines 10 having different functions (operations) that can be exerted, the count item in correspondence with the operation that cannot be executed by the multifunctional machine 10 may be included in the count map 22.

Further, the count map updating unit 30 may decide the count item that is newly changed to the count item "M/C energization time" by the count map updating unit 30 at a point in time at which the predetermined change condition is satisfied. That is, the count map updating unit 30 may decide the second count value at the point in time at which the predetermined change condition is satisfied.

For example, a case is considered in which the multifunctional machine 10 can perform an option operation of which operability is settable by the user. The operability of the option operation is decided by the presence or absence of hardware that may be connected to the multifunctional machine 10. For example, a finisher device, which is an option device, is assumed to need to be connected to the multifunctional machine 10 for exerting a finisher function in the multifunctional machine 10. In this case, the multifunctional machine 10 can exert the finisher function in a case where the finisher device is connected to the multifunctional machine 10, and the multifunctional machine 10 cannot exert the finisher function in a case where the finisher device is not connected to the multifunctional machine 10. Further, the operability of the option operation may be decided by not only the presence or absence of the option device, which is hardware, but also software (for example, setting).

In a case where the multifunctional machine 10 can perform the above option operation, the count map updating unit 30 may set, as the second count value, a count value in correspondence with an option operation that is set to be inoperable at the point in time at which the predetermined change condition is satisfied, among option operations. In the multifunctional machine 10, since the count value in correspondence with the option operation that is set to be inoperable at the point in time at which the predetermined change condition is satisfied is not used at least at the point in time, the count map updating unit 30 can set the count value in correspondence with the option operation as the second count value.

Here, a case is considered in which the count value in correspondence with the option operation that is set to be inoperable at the point in time at which the predetermined change condition is satisfied is set as the second count value, and then the option operation is made operable. For example, there is a case where the count map updating unit 30 changes the count item "Finisher discharge number" to the count item "M/C energization time", and then the finisher device is connected to the multifunctional machine 10, as shown in Fig. 4.

In this case, since the count value in correspondence with the count item "Finisher discharge number" is desired to be counted, there is a need to update the count map 22 to provide the count item "Finisher discharge number".

In preparation for such a case, first, for example, a condition that the count value in correspondence with the option operation that is previously inoperable is set to the second count value (that is, the count item in correspondence with the option operation that is previously inoperable is changed in the count map 22) and then the setting of the option operation is changed to be operable may be added as the predetermined change condition for updating the content of the count map 22. Accordingly, the count map updating unit 30 can update the count map 22 at this timing.

In this case, the count map updating unit 30 sets the count value counted in response to the option operation as a third count value that is a count value other than the first count value and the second count value among the plurality of count values included in the count map 22. For example, as shown in Fig. 4, in a case where the finisher function is operable in the multifunctional machine 10 in a state where the count item "Finisher discharge number", which is the option operation, is changed to the count item "M/C energization time", the count map updating unit 30 changes the count item "HCF1 Counter" whose application changeable information is "O" to the count item "Finisher discharge number" in correspondence with the option operation.

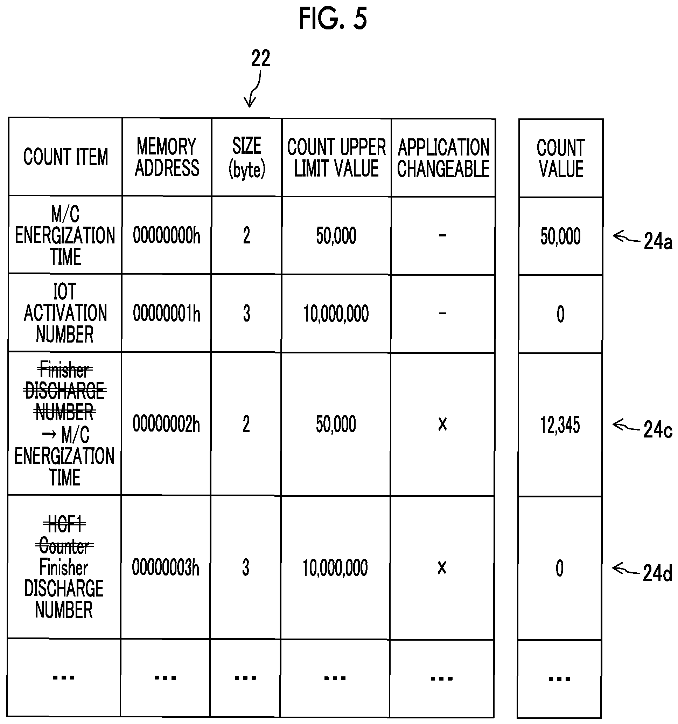

Fig. 5 shows the count map 22 after the change. Accordingly, the count value in correspondence with the count item "Finisher discharge number", which is the option operation, is the third count value stored in the count value storage region 24d, which is the count value other than the first count value stored in the count value storage region 24a and the second count value stored in the count value storage region 24c. Here, the count map updating unit 30 may also change, for example, the application changeable information in association with the newly changed count item "Finisher discharge number" to "× (impossible)".

Hereinafter, the count processing unit 28 counts the second count value stored in the count value storage region 24c in association with the count item "M/C energization time" in a case where the multifunctional machine 10 is energized, and counts the third count value stored in the count value storage region 24d in association with the count item "Finisher discharge number" in a case where the finisher operation is performed in the multifunctional machine 10.

The count map updating unit 30 may set, as the second count value, a count value that is not often counted, as another deciding criterion for deciding the second count value at the point in time at which the predetermined change condition is satisfied. In other words, the count map updating unit 30 may use, as the second count value, a count value of which the count value at the point in time at which the predetermined change condition is satisfied is less than a predetermined second count threshold value. An operation in correspondence with a small count value is an operation operable by the multifunctional machine 10, but can be said to be an operation that is not often used by the user. Therefore, the count map updating unit 30 can set, as the second count value, the count value in association with such a count item.

As described above, there may be the plurality of decision criteria for deciding which count item is to be changed in a case where the predetermined change condition is satisfied, but the count map updating unit 30 may determine the plurality of decision criteria stepwise. In other words, a priority may be provided to the plurality of decision criteria. For example, in a case where the predetermined change condition is satisfied, the count map updating unit 30 first determines whether or not the count item in correspondence with the operation that cannot be executed by the multifunctional machine 10 is included in the count map 22, and changes the count item in a case where the count item is included. In a case where the count item in correspondence with the operation that cannot be executed by the multifunctional machine 10 is not included in the count map 22, the count map updating unit 30 secondly determines whether or not the count item in correspondence with the option operation that is set to be inoperable among the option operations is included in the count map 22, and changes the count item in a case where the count item is included. In a case where the count item in correspondence with the option operation that is set to be inoperable among the option operations is not included in the count map 22, the count map updating unit 30 thirdly determines whether or not the count item of which the count value is less than the predetermined second count threshold value is included in the count map 22, and changes the count item in a case where the count item is included. In a case where the count item of which the count value is less than the predetermined second count threshold value is not included in the count map 22, the count map updating unit 30 may not update the count map 22. In this case, the processor 26 may notify, for example, the user that the count value for the count item related to the predetermined change condition cannot be counted.

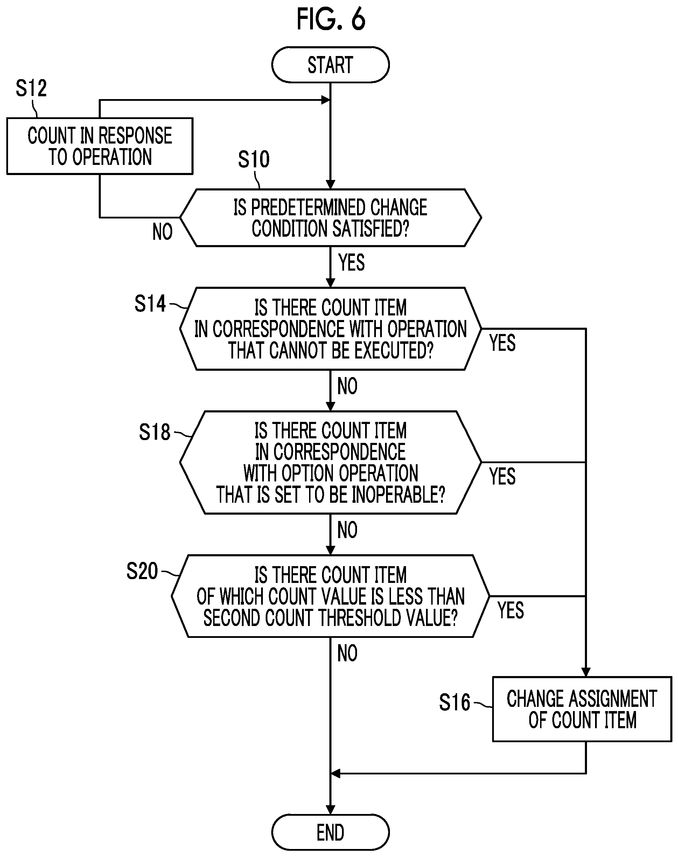

An outline of the configuration of the multifunctional machine 10 according to the present exemplary embodiment is as described above. Hereinafter, a flow of processing of the multifunctional machine 10 will be described with reference to a flowchart shown in Fig. 6.

In step S10, the count map updating unit 30 determines whether or not the predetermined change condition is satisfied. In the present exemplary embodiment, the predetermined change condition is that the count value stored in any of the plurality of count value storage regions 24 reaches the first count threshold value, or that the count item in correspondence with the option operation that is inoperable is changed and then the setting of the option operation is changed to be operable.

In a case where determination is made in step S10 that the predetermined change condition is not satisfied, the processing proceeds to step S12, and the count processing unit 28 counts the count value in response to the operation of the multifunctional machine 10 in step S12. In a case where the determination is made in step S10 that the predetermined change condition is satisfied, the processing proceeds to step S14.

In step S14, the count map updating unit 30 determines whether or not the count item in correspondence with the operation that cannot be executed by the multifunctional machine 10 is included in the count map 22. In a case where the count item is included, the processing proceeds to step S16, and the count map updating unit 30 changes the count item to the count item related to the predetermined change condition. For example, the count item "Finisher discharge number" is changed to the count item "M/C energization time" related to the predetermined change condition, as shown in Fig. 4.

In a case where determination is made in step S14 that the count item in correspondence with the operation that cannot be executed by the multifunctional machine 10 is not included in the count map 22, the processing proceeds to step S18.

In step S18, the count map updating unit 30 determines whether or not the count item in correspondence with the option operation that is set to be inoperable among the option operations is included in the count map 22. In a case where the count item is included, the processing proceeds to step S16, and the count map updating unit 30 changes the count item to the count item related to the predetermined change condition.

In a case where determination is made in step S18 that the count item in correspondence with the option operation that is set to be inoperable among the option operations is not included in the count map 22, the processing proceeds to step S20.

In step S20, the count map updating unit 30 determines whether or not the count item of which the count value is less than the predetermined second count threshold value is included in the count map 22. In a case where the count item is included, the processing proceeds to step S16, and the count map updating unit 30 changes the count item to the count item related to the predetermined change condition.

In a case where determination is made in step S20 that the count item of which the count value is less than the predetermined second count threshold value is not included in the count map 22, the count map updating unit 30 ends the processing without updating the count map 22.

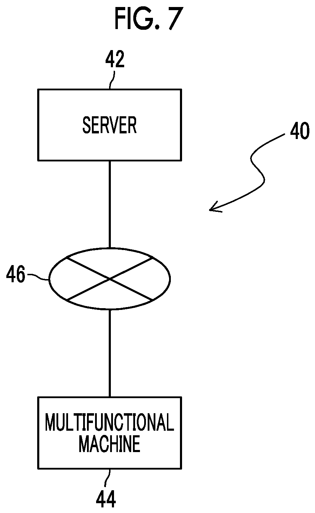

As described above, in the present exemplary embodiment, the count map 22 is stored in the memory 20 of the multifunctional machine 10, but the count map 22 may be stored in another device that is communicable with the multifunctional machine 10. For example, the present invention can also be employed for a count system 40 as shown in Fig. 7.

The count system 40 is configured by including a server 42 and a multifunctional machine 44. The server 42 and the multifunctional machine 44 are communicably connected to each other via a communication line 46 including a LAN, a WAN, or the like.

The server 42 is configured of, for example, a server computer. The server 42 is configured by including a processor such as a CPU, a memory such as an HDD, an eMMC, a ROM, or a RAM, and a communication interface such as a network adapter. The count map 22 may be stored in a memory of the server 42.

The multifunctional machine 44 has the same configuration requirements as the multifunctional machine 10 in the above exemplary embodiment. However, the count map 22 may not be stored in a memory of the multifunctional machine 44. The count processing unit 28 of the multifunctional machine 44 accesses the server 42 to refer to the count map 22 in response to the operation of the multifunctional machine 10, and counts the count value in accordance with the operation. Further, in a case where the predetermined change condition is satisfied, the count map updating unit 30 accesses the server 42 to update the count map 22 stored in the server 42.

Further, the count value may also be stored in the memory of the server 42. That is, the count value storage region 24 may be defined in the memory of the server 42.

Further, at least one of the count processing unit 28 or the count map updating unit 30 may be exerted by the processor of the server 42. In this case, the multifunctional machine 10 transmits information indicating a content of the operation to the server 42 each time the operation is performed. The count processing unit 28 exerted by the processor of the server 42 counts the count value, which is stored in the server 42 or the multifunctional machine 44, in accordance with the operation indicated by the information. Further, the count map updating unit 30 exerted by the processor of the server 42 updates the count map 22, which is stored in the server 42 or the multifunctional machine 44, in a case where the predetermined change condition is satisfied.

Although the exemplary embodiment of the present invention has been described above, the present invention is not limited to the exemplary embodiment, and various changes can be made without departing from the gist of the present invention.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The present invention can be employed for a program and a program product.

### (Supplementary Note)

(((1))) An information processing system comprising:
   a processor; and
   a memory,
   wherein the memory has a plurality of count value storage regions in which a plurality of count values, which are respectively in correspondence with respective operations of a count target apparatus and are counted in response to the respective operations of the count target apparatus, are stored, and
   the processor is configured to:
      count a first count value among the plurality of count values in response to a first operation of the count target apparatus; and
      change, in a case where a predetermined change condition is satisfied, a count value counted in response to the first operation from the first count value to a second count value, which is a count value other than the first count value among the plurality of count values.
(((2))) The information processing system according to (((1))),
   wherein the memory stores a count map in which a plurality of combinations of a count item in correspondence with the operation of the count target apparatus and information indicating the count value storage region are defined, and
   the processor is configured to:
      change, in a case where the predetermined change condition is satisfied, a content of the count item in association with the count value storage region in which the second count value is stored to a content in correspondence with the first operation, in the count map.
(((3))) The information processing system according to (((1))) or (((2))),
   wherein the predetermined change condition is that the first count value reaches a predetermined first count threshold value.
(((4))) The information processing system according to any one of (((1))) to (((3))),
   wherein the processor is configured to:
   set, as the second count value, a count value in correspondence with an operation capable of not being executed by the count target apparatus.
(((5))) The information processing system according to any one of (((1))) to (((4))),
   wherein the processor is configured to:
   decide the second count value at a point in time at which the predetermined change condition is satisfied.
(((6))) The information processing system according to (((4))),
   wherein the count target apparatus is capable of performing an option operation of which operability is settable by a user of the count target apparatus, and
   the processor is configured to:
      set, as the second count value, a count value in correspondence with an option operation that is set to be inoperable at a point in time at which the predetermined change condition is satisfied, among the option operations.
(((7))) The information processing system according to (((6))),
   wherein the predetermined change condition is that the count value in correspondence with the option operation is set as the second count value and then the setting of the option operation is changed to be operable, and
   the processor is configured to:
      in a case where the count value in correspondence with the option operation is set as the second count value and then the setting of the option operation is changed to be operable, set a count value counted in response to the option operation as a third count value, which is a count value other than the first count value and the second count value among the plurality of count values.
(((8))) The information processing system according to (((4))),
   wherein the processor is configured to:
   set, as the second count value, a count value that is less than a predetermined second count threshold value at a point in time at which the predetermined change condition is satisfied.
(((9))) An information processing program causing a computer including a memory that has a plurality of count value storage regions in which a plurality of count values, which are respectively in correspondence with respective operations of a count target apparatus and are counted in response to the respective operations of the count target apparatus, are stored, the program causing the computer to execute a process comprising:
   counting a first count value among the plurality of count values in response to a first operation of the count target apparatus; and
   changing, in a case where a predetermined change condition is satisfied, a count value counted in response to the first operation from the first count value to a second count value, which is a count value other than the first count value among the plurality of count values.

According to (((1))), (((2))), or (((9))), the plurality of count value storage regions, which is prepared in the memory, in which the plurality of count values in correspondence with respective operations of the count target apparatus are already stored can be effectively used.

According to (((3))), no further counting of the first count value due to the reach of the first count value to the count upper limit value can be suppressed.

According to (((4))) or (((6))), the count value stored in the count value storage region in correspondence with the operation that cannot be executed in the count target apparatus can be set as the second count value.

According to (((5))), the second count value can be dynamically decided.

According to (((7))), in a case where the count value stored in the count value storage region in correspondence with the option operation is set to the second count value and then the option operation is made operable, the count value can be counted in response to the option operation.

According to (((8))), the count value stored in the count value storage region in correspondence with the operation with a low frequency of use in the count target apparatus can be set as the second count value.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10, 44: multifunctional machine
12: communication interface
14: input interface
16: display
18: image processing unit
20: memory
22: count map
24: count value storage region
26: processor
28: count processing unit
30: count map updating unit
40: count system
42: server

## Claims

1. An information processing system comprising:
a processor; and
a memory,
wherein the memory has a plurality of count value storage regions in which a plurality of count values, which are respectively in correspondence with respective operations of a count target apparatus and are counted in response to the respective operations of the count target apparatus, are stored, and
the processor is configured to:
count a first count value among the plurality of count values in response to a first operation of the count target apparatus; and
change, in a case where a predetermined change condition is satisfied, a count value counted in response to the first operation from the first count value to a second count value, which is a count value other than the first count value among the plurality of count values.

2. The information processing system according to claim 1,
wherein the memory stores a count map in which a plurality of combinations of a count item in correspondence with the operation of the count target apparatus and information indicating the count value storage region are defined, and
the processor is configured to:
change, in a case where the predetermined change condition is satisfied, a content of the count item in association with the count value storage region in which the second count value is stored to a content in correspondence with the first operation, in the count map.

3. The information processing system according to claim 1 or 2,
wherein the predetermined change condition is that the first count value reaches a predetermined first count threshold value.

4. The information processing system according to any one of claims 1 to 3,
wherein the processor is configured to:
set, as the second count value, a count value in correspondence with an operation capable of not being executed by the count target apparatus.

5. The information processing system according to any one of claims 1 to 4,
wherein the processor is configured to:
decide the second count value at a point in time at which the predetermined change condition is satisfied.

6. The information processing system according to claim 4,
wherein the count target apparatus is capable of performing an option operation of which operability is settable by a user of the count target apparatus, and
the processor is configured to:
set, as the second count value, a count value in correspondence with an option operation that is set to be inoperable at a point in time at which the predetermined change condition is satisfied, among the option operations.

7. The information processing system according to claim 6,
wherein the predetermined change condition is that the count value in correspondence with the option operation is set as the second count value and then the setting of the option operation is changed to be operable, and
the processor is configured to:
in a case where the count value in correspondence with the option operation is set as the second count value and then the setting of the option operation is changed to be operable, set a count value counted in response to the option operation as a third count value, which is a count value other than the first count value and the second count value among the plurality of count values.

8. The information processing system according to claim 4,
wherein the processor is configured to:
set, as the second count value, a count value that is less than a predetermined second count threshold value at a point in time at which the predetermined change condition is satisfied.

9. An information processing program causing a computer including a memory that has a plurality of count value storage regions in which a plurality of count values, which are respectively in correspondence with respective operations of a count target apparatus and are counted in response to the respective operations of the count target apparatus, are stored, the program causing the computer to execute a process comprising:
counting a first count value among the plurality of count values in response to a first operation of the count target apparatus; and
changing, in a case where a predetermined change condition is satisfied, a count value counted in response to the first operation from the first count value to a second count value, which is a count value other than the first count value among the plurality of count values.

10. An information processing method comprising:
counting a first count value among a plurality of count values in response to a first operation of a count target apparatus; and
changing, in a case where a predetermined change condition is satisfied, a count value counted in response to the first operation from the first count value to a second count value, which is a count value other than the first count value among the plurality of count values.
